# EUROPEAN PATENT SPECIFICATION

(11) **EP 4 108 308 B1**
(45) Date of publication and mention of the grant of the patent: **02.04.2025**
(21) Application number: 20841081.1
(22) Date of filing: 19.02.2020
(51) Int. Cl.: B65D 41/34, B65D 47/06, B65D 47/12, B65D 51/24, B65D 47/04

(54) **SEALING FILTERING DEVICE, STOPPER THEREOF, AND ASSEMBLY FOR CLOSING A BOTTLE CONTAINING A LIQUID**
DICHTUNGSFILTERVORRICHTUNG, STOPFEN DAFÜR UND ANORDNUNG ZUM VERSCHLIESSEN EINER FLASCHE MIT EINER FLÜSSIGKEIT
DISPOSITIF DE BOUCHAGE FILTRANT, BOUCHON POUR CELUI-CI ET UNITÉ DE BOUCHAGE DE BOUTEILLE CONTENANT UN LIQUIDE

(43) Date of publication of application: 28.12.2022
(73) Proprietor: AB MV Group Production, 01112 Vilnius (LT); LLC "PC "Rossa", Kharkiv, 61082 (UA)
(72) Inventor: GOVORUN, Viktor, Kharkiv, 61118 (UA); VAR INSKAS, Visvaldas, 51424 Kaunas (LT); KHORTIYEV, Artem, Kharkiv, 61072 (UA); MILIUS, Eugenijus, 51424 Kaunas (LT); LEBEDYS, Alis, 51424 Kaunas (LT); JANKAUSKAIT, Virginija, 51424 Kaunas (LT)
(74) Representative: Gagel, Roland
(86) International application number: PCT/IB2020/051377
(87) International publication number: WO 2021/009571

(56) References cited:
- WO-A1-2018/172872
- WO-A1-2018/172872
- DE-A1- 1 915 356
- DE-T2- 69 403 406
- RU-C1- 2 381 268
- RU-C9- 2 456 342
- US-A- 5 417 860
- US-A- 5 616 242
- US-A1- 2015 165 356
- US-A1- 2017 050 781
- US-B2- 9 493 274

## Description

### Field of the Invention

The invention relates to closing filtering devices for a bottle containing a liquid. The invention claimed is intended to separate solid particles from the liquid that is poured out of the bottle.

### Description of the Related Art

Various alcoholic and low-alcohol beverages, such as vodka, whiskey, wine, etc., which are bottled in glass food bottles, are widely used in the marketplace. In order to distinguish the product and quickly identify it among other similar products, solid contents are added to the bottle, for example, pepper, wheat ears, etc. are added to vodkas, giving or quickly indicating to the buyer the consumer properties of the internal contents of the bottle containing a liquid.

In the course of transportation and storage of stoppered bottles containing a liquid, the solid contents may break down to form solid particles or impurities, which are distributed in the liquid and which may be poured out of the bottle with the liquid. The presence of solids poured out of the bottle with the liquid is undesirable, because the ultimate consumer will try, on a subconscious level, to separate the solids from the liquid, despite their small size, and, furthermore, due to the presence of solids, may relate with caution to the consumer properties of the liquid and advance unreasonably judgment of its low quality. Cereal plants (lat. *Gramineae*) form solid particles in the form of awns (lat. *arista*), which may stick to the throat and cause its irritation, which is also an undesirable phenomenon.

Accordingly, what is needed is to separate small solid impurities from a liquid that is poured out of a bottle.

Known in the art are various technical solutions of closing filtering devices for a bottle containing a liquid; see, for example, documents Nos. PCT/IB2018/051426, US98343, US5928512, US5616242, US5417860, US3220555, and US8337697.

The most similar to the closing filtering device for a bottle containing a liquid in accordance with the present invention is a closing filtering device for a bottle containing a liquid disclosed in document No. PCT/IB2018/051426, that comprises a stopper, a pouring insert with pouring openings, the pouring insert being connected to the stopper, the pouring insert comprising additionally an air duct that adjoins the pouring insert on the inlet side, the outlet side of the air duct going from the central opening of the stopper, and, furthermore, said closing filtering device comprising a sealing element of the pouring insert.

The stopper of the prior art closing filtering device for a bottle containing a liquid, which is placed in the pouring opening of the neck of said bottle containing the liquid, comprises sealing protrusions provided on the outer surface of said stopper in the upper part thereof, with the lower part of the stopper being made narrowed in the form of a truncated cone, in the upper smaller base whereof a central opening being provided and the stopper also comprising longitudinal ribs.

The assembly for closing a bottle containing a liquid is formed as a result of the fixation, at the bottleneck, of the closing filtering device for a bottle containing a liquid, said device comprising the stopper fixed in a pouring opening of the bottle neck of said bottle by means of the sealing protrusions provided on the outer surface of said stopper in the upper part thereof, with the lower part of the stopper plug being made narrowed in the form of a truncated cone, in the upper smaller base whereof a central opening being provided, the stopper also containing the longitudinal ribs and the air duct, the pouring insert with the pouring openings adjoining to the outlet side of said air duct, the pouring insert being connected to the stopper with the air duct going from the central opening of the stopper on the outlet side of said air duct, said closing filtering device comprising also filtering openings and the sealing element of the pouring insert.

The design feature of the prior art technical solution is that it comprises, as a separate part, a lamellar filtering insert, installed on the longitudinal ribs of the stopper across its cavity. The lamellar filtering insert is provided with pass-through openings, and the lamellar filter insert is also provided with a mesh with filtering openings for separating solid impurities from liquid which is poured from the bottle. The lamellar insert is pressed by the pouring insert against the longitudinal ribs this ensuring that the lamellar insert is securely seated in the stopper cavity.

The sealing element of the pouring insert is in the form of a cover located on the pouring insert and covering the pouring openings and the outlet opening of the air duct.

The prior art technical solution functions as follows: For pouring out the liquid from the cavity of the bottle, it is tilted and the liquid comes through the central opening of the stopper in its cavity. From the stopper cavity, the liquid passes through the filtering openings of the mesh of the plate insert, as a result of which the liquid is filtered and the filtered liquid, through the holes of the lamellar insert, enters the pouring insert, wherefrom the filtered liquid is poured out of the bottle through its pouring opening.

While pouring the liquid out of the bottle, a vacuum is created in the bottle cavity and, as a result, the ambient atmospheric air flows through the air duct into the bottle cavity.

The disadvantages of the prior art technical solution include, among others:
- A small area of the filtering openings of the lamellar filtering insert,
- High costs associated with the manufacture of the lamellar filtering insert with the filtering openings, which are formed by a mesh;
- The presence of additional process operations to install the lamellar filtering insert into the stopper cavity during the assembly of the closing filtering device;
- A low reliability of the closing filtering device design due to the fact that during the transportation of the assembled closing filtering device to a filling line, there may be a fall-out of the pouring insert from the stopper cavity, since the air duct is essentially a lever whose the outlet side whereof is not fixed in the stopper cavity this resulting in a load onto the joint between the pouring insert and the stopper; and
- The possibility of unfiltered liquid "leaking" through the outlet opening of the air duct.

### Essence of the Invention

In view of the above-mentioned disadvantages of the prior art, it is an object of the present invention to improve the design reliability of the closing filtering devices for a bottle containing a liquid, the stopper thereof, and the assembly for closing the bottle containing a liquid.

Furthermore, it is an object of the present invention to simplify both design and assembly of the closing filtering device for a bottle containing a liquid.

Moreover, it is an object of the present invention to increase the area of the filtering openings.

It is another object of the present invention to reduce the likelihood of unfiltered liquid pouring out of the bottle.

It is yet another object of the present invention to expand the arsenal of constructive implementation of the closing filtering devices for a bottle containing a liquid, the stopper thereof, and the assembly for closing the bottle containing a liquid.

Other objects and advantages of the present invention will become more apparent and the invention will be better understood by reference to the following description of embodiments of the invention taken in conjunction with the accompanying drawings.

The prior art stopper of a closing filtering device for a bottle containing a liquid, which is placed in the pouring opening of the neck of said bottle containing the liquid, comprises sealing protrusions provided on the external surface of said stopper in the upper part thereof, with the lower part of the stopper being made narrowed in the form of a truncated cone, in the upper smaller base whereof a central opening being provided, which opening being connected to the stopper cavity, and the stopper also comprising longitudinal ribs, ***in accordance with the present invention,*** filtering openings are provided on the lateral surface of the truncated cone of the lower part of the stopper and, in the smaller, upper base of the truncated cone of the lower part of the stopper, a support band is provided running all the way around the central opening, with an air duct tube adjoining to said support band and being connected, at its inlet, to the central opening of the stopper.

Moreover, in accordance with the present invention, an end wall, in which the outlet opening is made, is provided on the outlet side of the air duct tube.

Furthermore, in accordance with the present invention, the outlet opening of the air duct tube is made in the form of a confuser expanding from the central opening of the stopper.

In addition, in accordance with the present invention, the longitudinal ribs adjoin to the support band.

Also, in accordance with the present invention, the filtering openings are made slit-like and are disposed between adjacent longitudinal ribs.

The prior art closing filtering device for a bottle containing a liquid, which comprises the sealing protrusions, the stopper fixed in the pouring opening of the neck of said bottle by means of the sealing protrusions provided on the outer surface of said stopper in the upper part thereof, with the lower part of the stopper being made narrowed in the form of the truncated cone, in the upper smaller base whereof the central opening being provided, which opening being connected to the stopper cavity, the closing filtering device comprising also the air duct tube, the pouring insert with the pouring openings the pouring insert being connected to the stopper, the filtering openings and the sealing element of the pouring insert and the longitudinal ribs of the stopper, ***in accordance with present invention,*** the filtering openings are provided on the lateral surface of the truncated cone of the lower part of the stopper and, in the smaller, upper base of the truncated cone of the lower part of the stopper, a support band is provided running all the way around the central opening, the air duct tube connected, at its inlet, to the central opening adjoining to the support band, the pouring insert comprising additionally an air duct, which adjoins, on its inlet side, to the pouring insert with the outlet side of the air duct being inserted, in a backlash-free manner, into the central opening of the stopper being in fluid communication with the air duct tube of the stopper.

Furthermore, the prior art closing filtering device for a bottle containing a liquid, in accordance with the present invention, comprises the stopper, configured in accordance with the present invention, the pouring insert with the pouring openings the pouring insert being connected to said stopper, the pouring insert comprising additionally the air duct, which adjoins, on its inlet side, to the pouring insert with the outlet side of the air duct being inserted, in a backlash-free manner, into the central opening of the stopper communicating with the air duct tube of the stopper, said closing filtering device comprising also the sealing element of the pouring insert.

Moreover, in accordance with the present invention, the outlet opening of the air duct comprises a cross partition with pass-through openings.

In addition, in accordance with the present invention, the outer surface of the air duct of the pouring insert has a taper, whose diameter decreases from the pouring insert.

Furthermore, in accordance with the present invention, the sealing element of the pouring insert is configured in the form of a cover.

Also, in accordance with the present invention, it comprises a protective cap, on the inner end surface whereof the cover is fixed.

Moreover, in accordance with the present invention, there is provided a thread on the outer surface of the pouring insert that engages with the inner thread of the cover cap.

In addition, in accordance with the present invention, it comprises the protective cap with the sealing element of the pouring insert being configured in the form of a sealing gasket secured on the internal end surface of the protective cap.

Also, in accordance with the present invention, on the end face whereof an elastic insert is fixed, on the end face whereof a sealing element configured in the form of a sealing gasket, said elastic insert comprising a female thread that engages with the male thread provided on the outer surface of the bottleneck.

Yet furthermore, in accordance with the present invention, in the lower part of the pouring insert, there is provided a skirt with retainers that face inward into the pouring insert and engage with an external collar provided on the bottleneck.

In addition, in accordance with the present invention, in the area of the outlet opening of the air duct, a cross-sectional narrowing of the air duct tube is provided and, as a result thereof, a shoulder is formed on its outer surface said shoulder resting on the longitudinal ribs in the area where they adjoin to the support band of the central opening.

The prior art closing filtering device for a bottle containing a liquid, said device comprising the stopper fixed in the pouring opening of the bottle neck of said bottle by means of the sealing protrusions provided on the outer surface of said stopper in the upper part thereof, with the lower part of the stopper plug being made narrowed in the form of the truncated cone, in the upper smaller base whereof the central opening being provided said central opening being in fluid communication with the stopper cavity, said closing filtering device comprising also the air duct tube, the pouring insert with the pouring openings in fluid communication with the stopper, the filtering openings, and the sealing element of the pouring insert and longitudinal ribs of the stopper, ***in accordance with the present invention,*** the filtering openings are provided on the side surface of the truncated cone of the lower part of the stopper, the support band is provided in the upper smaller base of the truncated cone all the way around the central opening, the air duct tube adjoining the support band in fluid communication, at the inlet thereof, with the central opening, said pouring insert comprising additionally the cross partition that adjoins to the pouring insert by means of radial ribs with the pouring openings being disposed therebetween.

The closing filtering device for a bottle containing a liquid in accordance with the present invention comprises the stopper configured in accordance with the present invention, the pouring insert with the pouring openings said pouring insert comprising additionally the cross partition that adjoins to the pouring insert by means of the radial ribs with the pouring openings being disposed therebetween, said closing filtering device also comprising the sealing element of said pouring insert.

Furthermore, in accordance with the present invention, the assembly for closing a bottle containing a liquid, which is characterized by the presence of the bottleneck of the bottle containing the liquid with the closing filtering device fixed thereat, in accordance with the present invention, wherein the pouring insert comprises additionally the air duct, which adjoins, on its inlet side, to the pouring insert with the outlet side of the air duct being inserted, in a backlash-free manner, into the central opening of the stopper being, in accordance with the present invention, in fluid communication with the air duct tube of the stopper.

Yet furthermore, in accordance with the present invention, the assembly for closing a bottle containing a liquid which is characterized by the presence of the bottleneck of the bottle containing the liquid with the closing filtering device fixed thereat, in accordance with the present invention, wherein the pouring insert comprises additionally the cross partition that adjoins to the pouring insert by means of the radial ribs with the pouring openings being disposed therebetween.

The inventors have found that the air duct tube being is in fluid communication with the central opening of the stopper and that the filtering openings are disposed on the lower part of the stopper makes it possible to increase the area of the filtering openings, to simplify the design of manufacturing the parts of the closing filtering device, as well as makes it possible to simplify the assembly of the closing filtering device.

The air duct tube being in fluid communication with the central opening of the stopper enables the air duct tube to be made as a single part with the stopper this making it possible to reduce the cost of manufacture of the stopper and to simplify the process thereof. The stopper with the air duct tube is fabricated, for example, of polyethylene, whilst the pouring insert is manufactured, for example, of polycarbonate. This also makes it possible to speed up and simplify the production operation to assembly the closing filtering device.

Furthermore, when using the present invention, the probability of the disconnection of the pouring insert from the stopper during the transportation of the assembled closing filtering device to a filling line is decreased. Since the outlet side of the air duct of the pouring insert is fastened, in a backlash-free manner, in the central opening of the stopper, this makes it possible to fix the outlet side of the air duct of the pouring insert and to reduce thereby vibrations that are transferred from the air duct to the elements of connection of the pouring insert and the stopper. In accordance with one embodiment of the present invention, the length of the air duct of the pouring insert is shortened materially this making it possible to reduce a load onto the elements of connection of the stopper to the pouring insert, to reduce the consumption of expensive material, of which the pouring insert is usually made, for example, polycarbonate, as well as makes it possible to reduce rejects when manufacturing the pouring insert with the air duct. It should be also noted that the shortening of the length of the air duct of the pouring insert when using the present invention reduces also a production defect that may occur during the transportation of the pouring insert manufactured to assembly facilities - the defect caused by that the transportation and positioning of the pouring insert results in that a stress is applied to the air duct, which stress is transferred to the longitudinal ribs that connect the air duct to the pouring insert and may lead to cracks, while if a shorter air duct is used, said loads are reduced this, accordingly, resulting in the reduction of production defect.

According to another embodiment of the present invention, the end wall is provided on the outlet side of the air duct tube of the stopper. Said end wall comprises the outlet opening this making it possible to regulate both shape and diameter of the outlet opening of the air duct tube of the stopper over a wide range. It should be noted separately that making the outlet opening of the air duct tube in the form of a confuser expanding from the central opening of the stopper makes it possible to increase an air movement velocity and an air flow density in its narrowest part, while, for a liquid, a flow resistance is increased due to the widening of the confuser of the outlet opening from the central opening of the stopper, and this leads to a smaller tilt angle of the bottle containing a liquid for a possible "leaking" of an unfiltered liquid out of the bottle cavity into the air duct tube of the stopper through the outlet opening of the air duct tube of the stopper this also being an advantage of the present invention.

The location of the filtering openings between the longitudinal ribs makes it possible to increase the total filtering surface of the stopper.

Moreover, the presence of the support band, to which the longitudinal ribs of the stopper adjoin, increases the reliability of the stopper design this making it possible to reduce the wall thickness of the stopper in the upper part thereof from 1 mm down to 0.7 mm while, in the area of disposition of the filtering openings, the reduction of the thickness of the lower part of the stopper from 1 mm down to 0.3 mm is possible with the preservation of its operational (strength) characteristics this making it possible to reduce material consumption for manufacturing the stopper this also being an advantage of the present invention.

The present invention makes it possible to reduce significantly the time of its production and assembly because, during the manufacture of the stopper, the filtering openings of the lower cone part of the stopper are made at once. The necessity of manufacturing the filtering plate and installing it during assembly is eliminated as compared with the prior art. Also, the present invention makes it possible to reduce the number of parts this leading to a reduction in the technological operations for assembling the closing filtering device this also being an advantage of the present invention. It should be also noted that the alignment of the parts (the stopper, the pouring insert) is simplified in the assembly process this also being an advantage of the present invention.

The employment of the cross partition in the pouring insert, which partition adjoins to the pouring insert through the radial ribs, makes it possible to align and stabilize the flow of the liquid being poured out of the bottle through the filtering openings of the stopper provided on the side surface of the truncated cone. Because said filtering openings are provided in the truncated cone, this makes it possible to use a various total flow cross-section of the filtering openings of the stopper this ensuring an uneven flow of the filtered liquid along the length of the lower part of the stopper this making it possible to stabilize the air flow and ensuring an air entry into the stopper cavity through the pouring openings of the pouring insert while the air duct tube being in fluid communication with the central opening of the stopper ensures air supply from the stopper cavity through the air duct tube to the cavity of the bottle containing the liquid.

An additional presence of the air duct in the pouring insert, which air duct is inserted, on the outlet side thereof, into the central opening of the stopper in a backlash-free manner, makes it possible to ensure a fuller air supply to the bottle cavity when the liquid is poured out through the bottleneck. The presence of the cross partition comprising the pass-through openings in the outlet opening of the air duct also reduces the possibility of unfiltered liquid leaking from the air duct tube to the air duct of the pouring insert.

The location of the longitudinal ribs within the stopper cavity, which ribs adjoin to the support band, performs also the function of air duct guides into the central opening of the stopper during its assembly, this reducing rejects during assembly and increasing an assembly rate this also being an advantage of the present invention.

The presence of a taper on the outer surface of the air duct makes it possible to improve the mating and connection point of the air duct and the central opening this increasing the reliability of fixation of the pouring insert on the stopper.

It should also be noted that the presence of the pass-through openings and the air duct increases the resistance this leading to a reduction in the probability of unfiltered liquid spilling out through the air duct of the pouring insert.

The air movement velocity in the pass-through openings formed by the cross partition is increased this creating an additional aerodynamic lock preventing any unfiltered liquid from flowing out into throughout air duct of the pouring insert.

It should be added separately that the presence of the cross partition also improves the mating of the inner surface of the support band of the central opening of the stopper with the outer surface of the air duct of the pouring insert and retains its properties under temperature fluctuations, since the stopper and the air duct of the pouring insert are made of different materials this also being an advantage of the present invention.

Also, the inventors of the present invention have found that the presence of the cross partition increases the quality of the manufacture of the pouring insert and reduces the probability of formation of caverns on its surface, the presence of which worsens the tightness of the pouring insert in the area of its adjacency to the stopper. Also, the presence of the cross partition leads to acceleration of the casting process of the pouring insert with the air duct by up to 30% this also being an advantage of the present invention.

It should also be noted that the provision of the support band in the upper smaller base of the truncated cone of the lower part of the stopper and the adjoining the air duct of the stopper thereto makes it possible to shift the center of gravity of the stopper to the upper smaller base of the truncated cone, which simplifies and accelerates the positioning of the stopper in the automatic assembly machine this also being an advantage of the present invention.

It should also be noted once again that, in accordance with one embodiment of the present invention, the length of the air duct of the pouring insert does not exceed the height of the cavity of the stopper, and this makes it possible to reduce expenses for expensive polycarbonate, from which the pouring insert is made, which also increases the quality and speed of casting the pouring insert with the air duct, and also reduces the amount of stress caused by the air duct on the radial ribs during the storage and transportation of manufactured pouring inserts with the air duct and this leads to a decrease in their rejects this also being an advantage of the present invention.

It should also be noted that the inventors have found that the provision of the filtering openings in the lower part of the stopper made in the form of the truncated cone, to the upper smaller base whereof the air duct tube adjoins, makes it possible to produce a pressure difference sufficient to carry air from the cavity of the stopper through the air duct into the bottle cavity, and to provide sufficient head for the liquid poured out of the bottle.

### Brief Description of the Drawings

In considering some embodiments of the present invention, a narrow terminology is used. The present invention, however, is not limited to the accepted terms and it should be borne in mind that each such term encompasses all equivalent solutions, which operate in a similar manner and are used to solve the same problems.

Some examples of practical embodiments of the present invention will now be described in more detail with reference to the accompanying drawings, in which:
**Fig. 1** is a cross-sectional vertical elevation view the closing filtering device for a bottle containing a liquid in accordance with the present invention - a first embodiment;
**Fig. 2** is a perspective view from the side of the air duct tube of the stopper of the closing filtering device for a bottle containing a liquid of **Fig. 1****;**
**Fig. 3** is an exploded view of the closing filtering device for a bottle containing a liquid of **Fig. 1****;**
**Fig. 4** is a plan view of the stopper of **Fig. 3****;**
**Fig. 5** is a perspective view of the pouring insert installed onto the stopper;
**Fig. 6** is a front view of the pouring insert;
**Fig. 7** is a fragmentary cross-sectional view of the closing filtering device of **Fig. 1** with the protective cap installed onto it;
**Fig. 8** is a fragmentary cross-sectional view of the closing assembly formed as a result of the fixation of the closing filtering device of **Fig. 7** on the bottleneck;
**Fig. 9** is a fragmentary cross-sectional view of the closing assembly of **Fig. 8** with the pouring insert being open;
**Fig. 10** is a fragmentary cross-sectional view of the closing assembly in accordance with a second embodiment of the present invention;
**Fig. 11** is a fragmentary cross-sectional view of the closing assembly formed as a result of the fixation of the closing filtering device on the bottleneck in accordance with a third embodiment of the present invention;
**Fig. 12** is a fragmentary cross-sectional view of the closing assembly formed as a result of the fixation of the closing filtering device on the bottleneck in accordance with a fourth embodiment of the present invention;

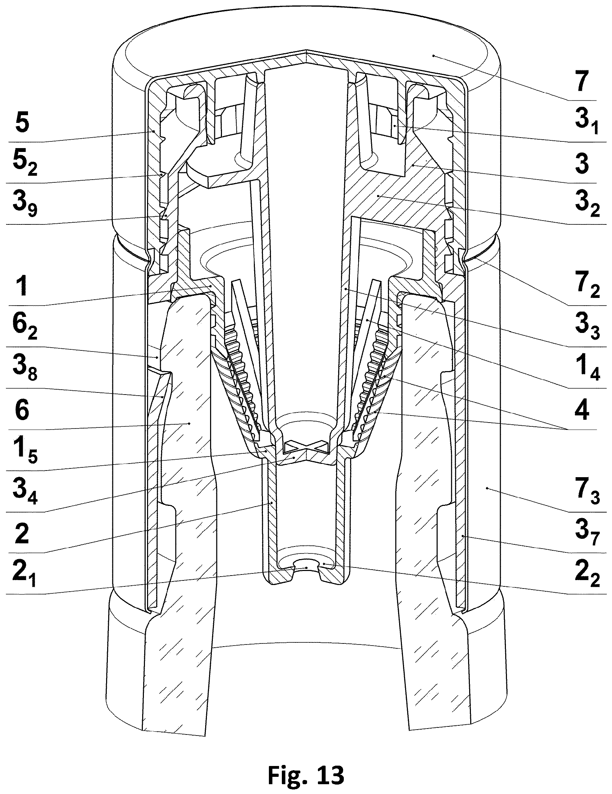

**Fig. 13** is a fragmentary cross-sectional view of the closing assembly formed as a result of the fixation of the closing filtering device on the bottleneck in accordance with a fifth embodiment of the present invention;
**Fig. 14** depicts a sixth embodiment of the present invention;
**Fig. 15** is a fragmentary cross-sectional view of the closing assembly in accordance with the sixth embodiment of the present invention depicted in **Fig. 14****.**

### List of Reference Numerals

**1** - a stopper
**1₁** - sealing protrusions
**1₂** - a lower part of the stopper **1** made in the form of a truncated cone
**1₃** - a central opening provided in the upper, smaller base of the truncated cone of the lower part **1₂** of the stopper **1.**
**1₄** - longitudinal ribs of the stopper **1.**
**1₅** - a support band
**2** - a air duct tube
**2₁** - an outlet opening of the air duct tube **2**
**2₂** - an end wall of the air duct tube **2**
**3** - a pouring insert of the stopper **1.**
**3₁** - pouring openings of the pouring insert **3**
**3₂** - radial ribs of the pouring insert **3,** which form the pouring openings **3₁**
**3₃** - an air duct of the pouring insert **3**
**3₄** - a cross partition provided from the outlet side of the air duct **3₃**
**3₅** - a pass-through opening of the cross partition **3₄**
**3₆** - a shoulder formed on the outer surface of the air duct **3₃** in the area of location of its outlet opening;
**3₇** - a skirt provided in the lower part of the pouring insert **3**
**3₈** - retainers of the skirt **3₇**
**3₉ -** a thread provided on the outer surface of the pouring insert **3**
**3₁₀** - a cross partition of the pouring insert **3**
**4** - filtering openings
**5** - a sealing element made in the form of a cover
**5₁** - a sealing element made in the form of a sealing gasket
**5₂** - a female thread made in the cover **5**
**6** - a bottleneck
**6₁** - a male thread of the bottleneck **6**
**6₂** - an external collar provided on the bottleneck **6**
**7** - a protective cap
**7₁** - an internal collar of the protective cap **7**
**7₂ -** a perforation break line of the protective cap **7**
**7₃** - a lower part of the protective cap **7.**
**7₄** - a thread of the protective cap **7.**
**7₅** - a fixing groove of the protective cap **7.**
**8** - an elastic insert
**8₁** - a female thread of the elastic insert **8**

### Embodiments of the Present Invention

### First Embodiment of the Invention

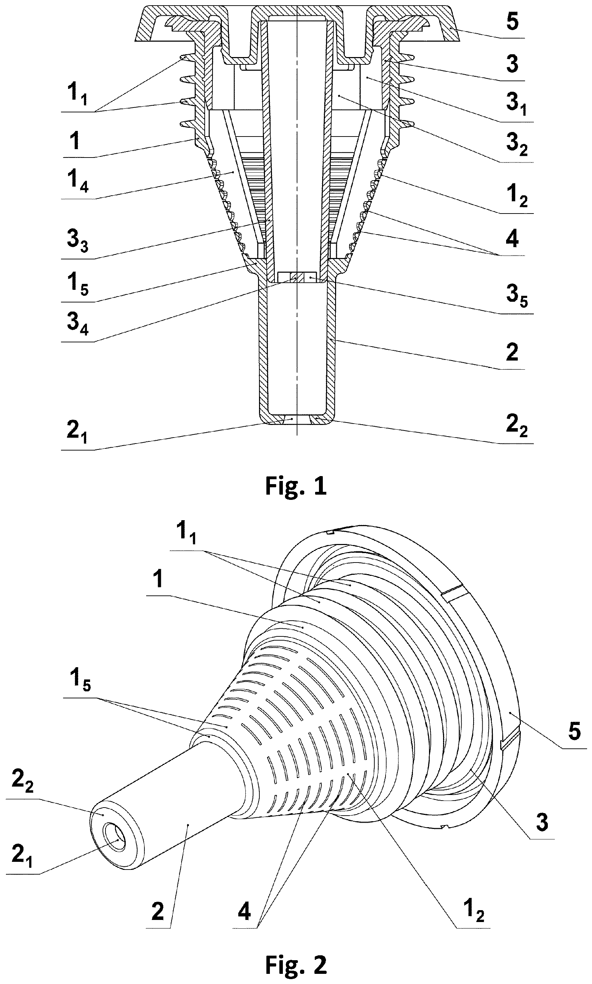

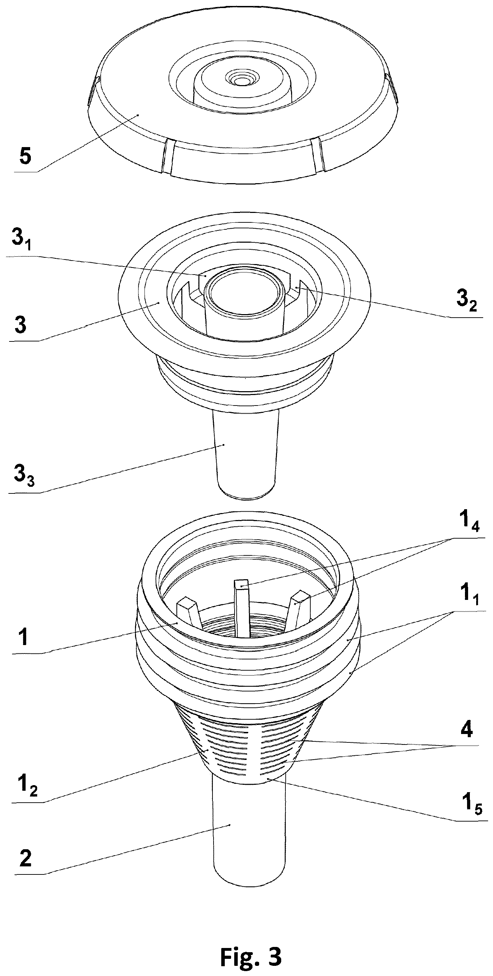

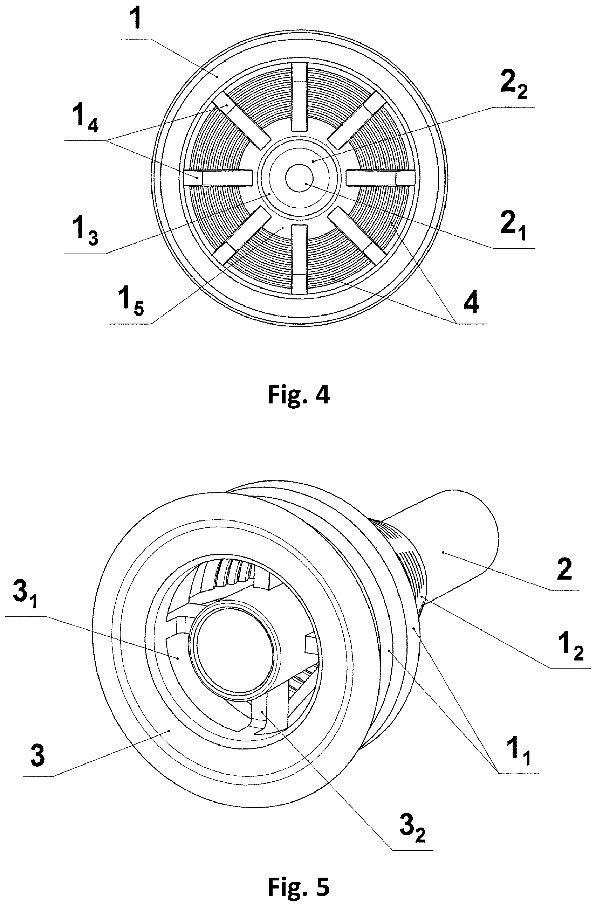

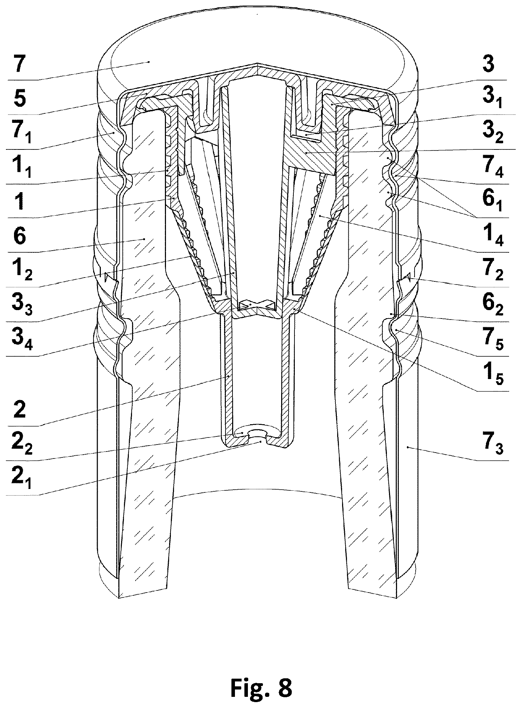

**Fig.1** to **Fig.9** depict the first embodiment of the present invention in accordance wherewith the closing filtering device for a bottle containing a liquid comprises a hollow stopper **1,** which is fixed in a pouring opening of a bottleneck **6 (****Fig.8**) by means of sealing protrusions **1₁.** The sealing protrusions **1₁** are provided on the external surface of the stopper **1** in the upper part thereof (**Fig.1**). A lower part **1₂** of the stopper **1** is made in the form of the truncated cone (**Fig.2**) with a central opening **1₃** being formed in the upper, smaller base whereof (**Fig.4**). An air duct tube **2** adjoins to a support band **1₅** and, in its inlet, is in fluid communication with the central opening **1₃** of the stopper **1.** On the outlet side of a air duct tube **2,** an end wall **2₂** is provided, in which an outlet opening **2₁** is provided in the form of a confuser (**Fig.1**) expanding from the central opening **1₃** of the stopper **1.**

A pouring insert **3** is located on the stopper **1** and comprises radial ribs **3₂,** which, on one side, adjoin to the pouring insert **3** and, on the other side, adjoin to therapeutic air duct tube **2** on the inlet side thereof with pouring openings **3₁** being located between radial ribs **3₂.** The pouring insert **3** comprises additionally an air duct **3₃,** which, on its inlet side, adjoins to the pouring insert **3,** while the outlet side of an air duct **3₃** is inserted, in a backlash-free manner, into the central opening **3₁** of the stopper **1** being in fluid communication with air duct tube **2** of the stopper **1.**

The outlet opening of the air duct **3₃** of the pouring insert **3** comprises a cross partition **3₄** with pass-through openings **3₅.**

Disposed in the cavity of the stopper **1** are the longitudinal ribs **1₄,** which adjoin (see **Fig.1****,** **Fig. 4**) to the support band **1₅,** which is provided in the upper, smaller base of the truncated cone of the lower part **1₂** of the stopper **1.**

Filtering openings **4** are provided on the side surface of the truncated cone of the lower part **1₂** of the stopper **1.** The filtering openings **4** have a slit-like shape and are located between adjacent longitudinal ribs **1₄** (**Fig.4**).

A sealing element of the pouring insert **3** is made in the form of a cover **5,** which closes (seals) the pouring openings **3₁** and the inlet opening of the air duct **3₃** of the pouring insert **3.**

The closing filtering device for a bottle containing a liquid in accordance with the first embodiment of this invention is fabricated as follows: First, the stopper **1** with the air duct tube **2;** the pouring insert **3** with the air duct **3₃;** the cover **5,** a protective cap **7** are produced in separate casting molds. The stopper **1** and the cover **5** are produced, for example, of polyethylene. The pouring insert **3** with the air duct **3₃** is made, for example, of polycarbonate. The protective cap **7** is fabricated, for example, using a metal drawing method, for example, of aluminum or alloys thereof.

Prior to the assembly, the protective cap **7** is molded, namely, an internal collar **7₁** is molded to retain the closing filtering device assembled in the protective cap **7** due to the engagement thereof with the cover **5,** as well as a perforation line **7₂** used to separate a lower part **7₃** of the protective cap **7** is produced.

The closing filtering device is then assembled. For this, the stopper **1** is connected to the pouring insert **3,** and, as a result thereof, the pouring insert **3** is fixed on the stopper **1** and the outlet of the air duct **3₃** is inserted into the central opening **1₃** of the stopper **1.** The external surface of air duct **3₃** adjoins the support band **1₅,** and the internal cavity of the air duct **3₃** is in fluid communication with the internal cavity of the air duct tube **2** of the stopper **1.**

The cover **5** is then installed onto the pouring insert **3.** As a result thereof, an assembled closing filtering device is produced (**Fig.1, Fig.2**).

The assembled closing filtering device is ten installed into the protective cap **7;** when doing so, the outer edge of the cover **5** engages with the internal collar **7₁** of the protective cap **7** and, as a result thereof, the cover **5** is fixed on the internal end surface of the protective cap **7.**

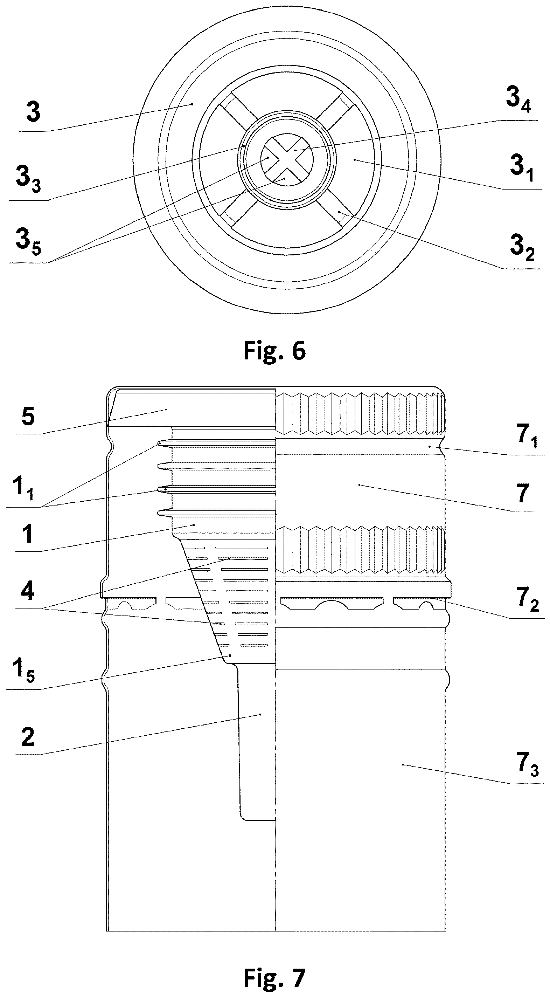

As a result, the closing filtering device for a bottle containing a liquid, which device is inserted into the protective cap **7 (****Fig.7****),** is produced.

The assembled closing filtering device (**Fig.7**) is then delivered (transported) to a filling line where a solid content is placed into the bottle cavity (not shown in the Figures) and a liquid is poured into the bottle cavity through the pouring opening of the bottleneck **6.** The closing filtering device is then installed onto the bottleneck **6** and is fixed thereon (**Fig.7**). When doing it, the stopper **1** is disposed in the pouring openings of the bottleneck 6 and is fixed therein by means of the sealing protrusions **1₁**. The pouring insert **3** is fixed on the stopper **1.** A thread **7₄** is then rolled in the upper part of the protective cap **7,** which thread matches a male thread **6₁** of the bottleneck **6** and a fixing groove **7₅** at a lower part **7₃** of the protective cap **7** is rolled. The fixing groove **7₅** engages with an external collar **6₂** of the bottleneck **6.**

As a result thereof, the assembly for closing a bottle containing a liquid is formed (**Fig. 8**). The assembly for closing a bottle containing a liquid in accordance with the first embodiment of the present invention is characterized by the presence of the bottleneck **6,** fixed whereon is the closing filtering device, in which, on the side surface of the truncated cone of the lower part **1₂** of the stopper **1,** the filtering openings **4** are provided while in the upper, smaller base of the truncated cone of the lower part **1₂** of the stopper **1,** the support band **1₅** is provided all the way around the central opening **1₃**. The air duct tube **2** being, in its inlet, in fluid communication with the central opening **1₃** adjoins the support band **1₅**; the pouring insert **3** comprises additionally the air duct **3₃,** which, on its inlet side, adjoins to the pouring insert **3,** while the outlet side of the air duct **3₃** in inserted, in a backlash-free manner, into the central opening **3₁** of the stopper **1,** which opening being in fluid communication with air duct tube **2** of the stopper **1.** The sealing element of the pouring insert **3** is made in the form of the cover **5.** The cover **5** is fixed by means of the internal collar **7₁** on the internal end surface of the protective cap **7.** The thread **7₄** of the protective cap **7** matches a male thread **6₁** of the bottleneck **6.** The fixing groove **7₅** is provided in the lower part **7₃** of the protective cap **7** and engages with c the external collar **6₂** of the bottleneck **6** this being necessary to separate the lower part **7₃** of the protective cap **7** along the perforation line **7₂**.

The bottle containing the liquid with the closing assembly formed on its bottleneck **6** is delivered to the ultimate consumer.

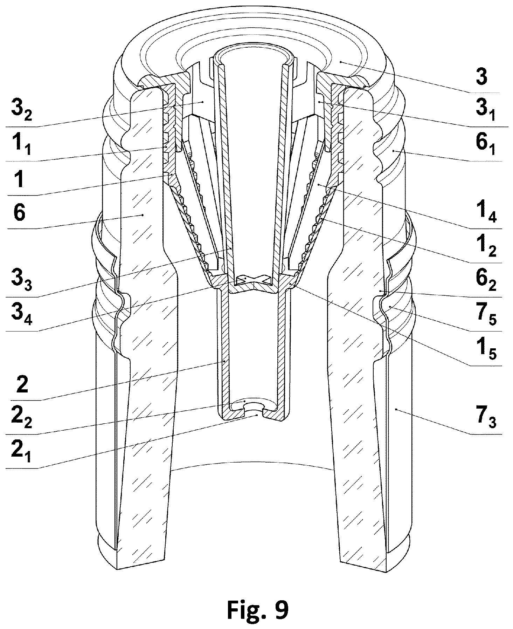

In order to open the assembly for closing (**Fig.8**), the ultimate consumer holds the bottle with one hand, while, with the other hand, holds the upper part the protective cap **7** of the assembly for closing and starts rotating it counterclockwise and, as a result of that the protective cap **7** has the thread **7₄** that mates the male thread **6₁** provided on the external surface of the bottleneck **6,** the protective cap **7** at the bottleneck **6,** is unscrewed this resulting in the separation of the upper part of the protective cap **7** from its lower part **7₃**, which stays on the bottleneck **6** (**Fig.9**) and evidences the first opening of the assembly for closing a bottle containing a liquid. Also, in the process of unscrewing the protective cap **7,** he cover **5** is separated from the pouring insert **3,** this resulting in the opening of the pouring openings **3₁** and the inlet opening of the air duct **3₃**.

Then, in order to pour the liquid out of the bottle, the bottle **6** is tilted and the liquid from the bottle cavity enters the bottleneck **6** and starts flowing through the filtering openings **4** of the lower part **1₃** of the stopper **1.** As a result of liquid flowing through the filtering openings **4,** solid particles are separated from the liquid and, as a result thereof, the filtered liquid enters the cavity of the stopper **1,** where the liquid flow to be poured out is formed. The liquid is then poured out of the cavity of the stopper **1** through the pouring openings **3₁** of the pouring insert **3.**

In the course of pouring out the liquid, a lack of pressure (vacuum) is created in the bottle cavity this resulting in that the atmospheric ambient air enters the air duct **3₃** of the pouring insert **3,** and, therefrom, said air, through pass-through openings **3₅** of the cross partition **3₄**, enters the air duct tube **2** of the stopper **1,** from which the air enters the bottle cavity through the outlet opening **2₁** this resulting in pressure equalization (compensation) this ensuring that the liquid flows out of the bottle cavity.

In the pass-through openings **3₅** of the cross partition **3₄** and in the outlet opening **2₁** of the air duct tube **2,** an increase in air velocity occurs this preventing an unfiltered liquid from pouring out into the air duct tube **2** or the air duct **3₃**.

The provision of the outlet opening **2₁** in the end wall **2₂** in the form of a confuser expanding from the central opening **1₃** of the stopper **1** makes it possible to increase a liquid contact area and, accordingly, this resistance reduces the likelihood of a possible leaking of an unfiltered liquid in the cavity of the air duct tube **2** of the stopper **1** through its outlet opening **2₁**.

It should be noted additionally that the pass-through openings **3₅** of the cross partition **3₄** comprise a smaller cross-sectional area as compared to the outlet opening **2₁** of the air duct tube **2,** and this reduces the likelihood of the flowing of an unfiltered liquid in the cavity of the air duct **3₃**.

### Second Embodiment of the Invention

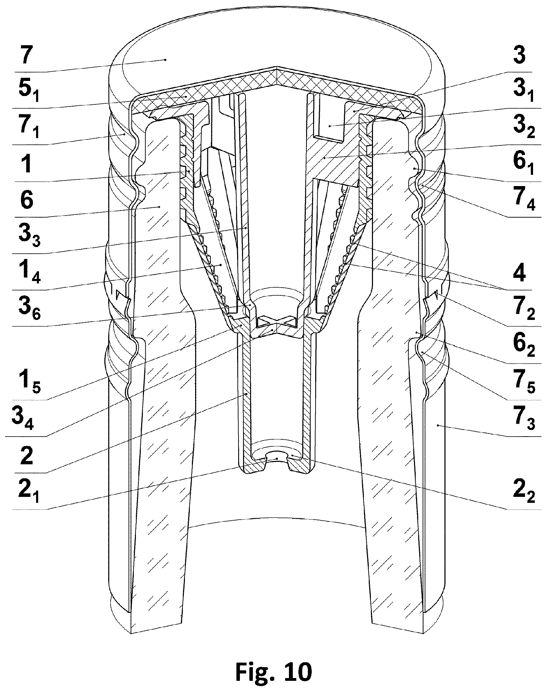

**Fig.10** depicts the second embodiment of the present invention, which differs from the first embodiment of the present invention in that in the area of the outlet opening of the air duct **3₃,** a cross-sectional narrowing of the air duct tube **3₃** is provided and, as a result whereof, a shoulder **3₆** is formed on its outer surface said shoulder resting on the longitudinal ribs **1₄** in the area where they adjoin to the support band **1₅** of the central opening **1₃** of the stopper **1.** The presence of the shoulder **3₆** of the air duct **3₃** makes it possible to install the pouring insert **3** with an interference fit this reducing the vibration of the outlet side of the air duct **3₃**.

The sealing element is configured in the form of a sealing gasket **5₁** secured on the internal end surface of the protective cap **7** by means of the internal collar **7₁**. The option of gluing the sealing gasket **5₁** to the internal end surface of the protective cap **7** is also envisaged.

The sealing gasket **5₁** may be provided on the internal end surface of the protective cap **7** by casting a sealing material, for example, PROVALIN^{®} brand.

The closing filtering device in accordance with the second embodiment consists of the following elements: the stopper **1** with the air duct tube **2,** the pouring insert **3** with the air duct **3₃,** the sealing gasket **5₁** and the protective cap **7.**

The closing filtering device for a bottle containing a liquid in accordance with this embodiment comprises the stopper **1,** the pouring insert **3** with the pouring openings **3₁**, connected to said stopper **1,** and the sealing element of said pouring insert **3,** configured in the form of the sealing gasket **5₁**. The pouring insert **3** comprises additionally the air duct **3₃,** which, on its inlet side, adjoins to the pouring insert **3** while the the outlet side of the air duct **3₃** is inserted, in a backlash-free manner, into the central opening **3₁** of the stopper **1** connected to the air duct tube **2** of the stopper **1.**

### Third Embodiment

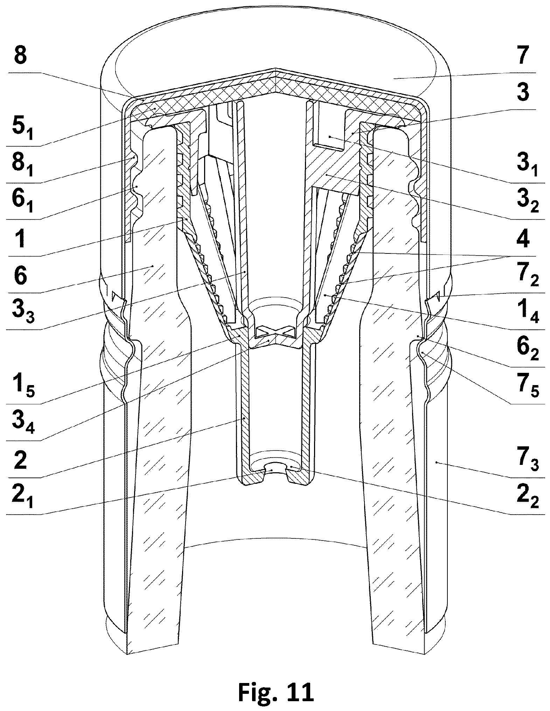

The third embodiment of the present invention depicted in **Fig.11** differs from the second embodiment in that an elastic insert **8** is secured on the end surface of the protective cap **7** with a sealing element configured in the form of the sealing gasket **5₁** being disposed on the end surface of said elastic insert. The elastic insert **8** comprises a female thread **8₁**, which engages with the male thread **6₁** provided on the external surface of the bottleneck **6.**

The sealing gasket **5₁** may be secured on the internal end surface of the elastic insert **8** or may be molded by casting a sealing material, for example, PROVALIN^{®} brand, on the internal end surface of the elastic insert.

The closing filtering device in accordance with the third embodiment consists of the following elements: the stopper **1** with the air duct tube **2,** the pouring insert **3** with the air duct **3₃,** the elastic insert **8,** the sealing gasket **5₁** and the protective cap **7.**

### Fourth Embodiment

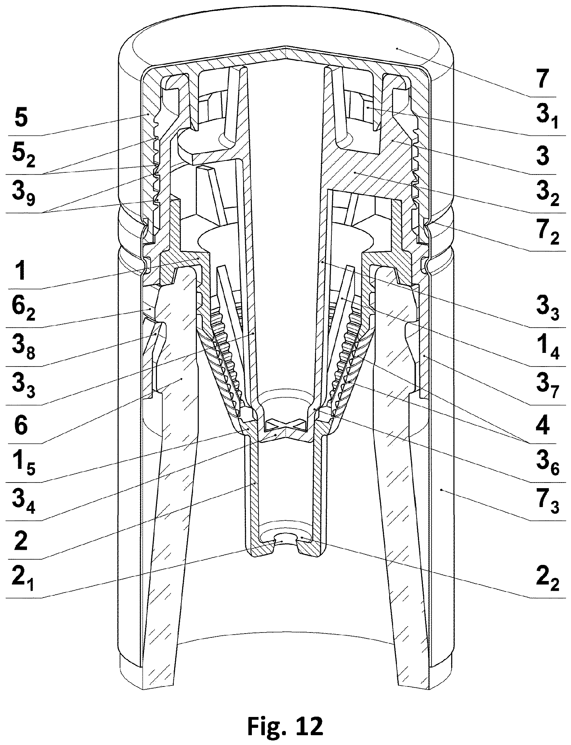

The fourth embodiment of the present invention depicted in **Fig.12** differs from the second embodiment in that a thread **3₉**, which engages with the female thread **5₂** of the cover **5** is provided on the external surface of the pouring insert 3. In the lower part of the pouring insert **3,** there is provided a skirt **3₇** with retainers **3₈** that face inward into the pouring insert **3** and engage with an external collar **6₂** provided on the bottleneck **6.**

The stopper **1** is disposed in the pouring opening of the bottleneck **6** while comprises an external bent provided in the upper part of the stopper **1** and resting onto the external end surface of the pouring opening of the bottleneck **6.** Also, in the upper part of the stopper **1** an upper skirt is provided the upper surface whereof adjoins to the internal surface of the pouring insert.

The closing filtering device in accordance with the fourth embodiment consists of the following elements: the stopper **1** with the air duct tube **2,** the pouring insert **3** with the air duct **3₃,** with the thread **3₉**, with the lower skirt **3₇** and with the retainers **3₈**; the cover **5** with the female thread **5**_{**2**,} and the protective cap **7.**

### Fifth Embodiment of the Invention

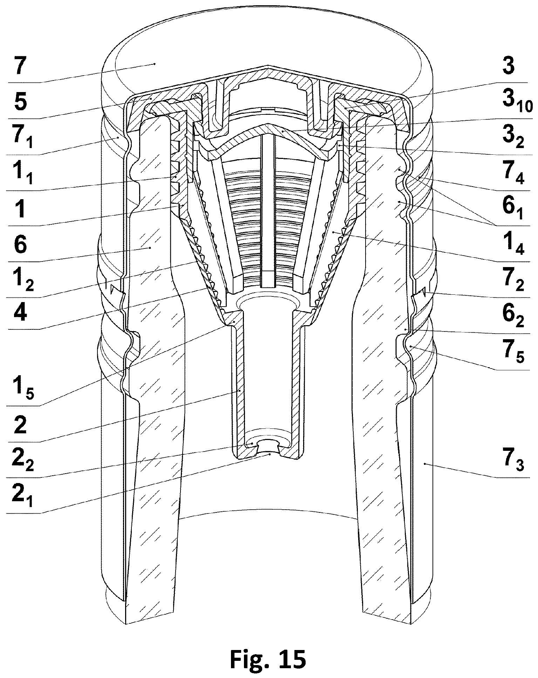

The fifth embodiment of the present invention depicted in **Fig.15** differs from the fourth embodiment of the present invention in that the skirt **3₇** of the pouring insert **3** has an elongated shape and is located in the upper part thereof are retainers **3₈** that face inward into the pouring insert **3** and engage with the external collar **6₂** provided on the bottleneck **6.**

### Sixth Embodiment of the Invention

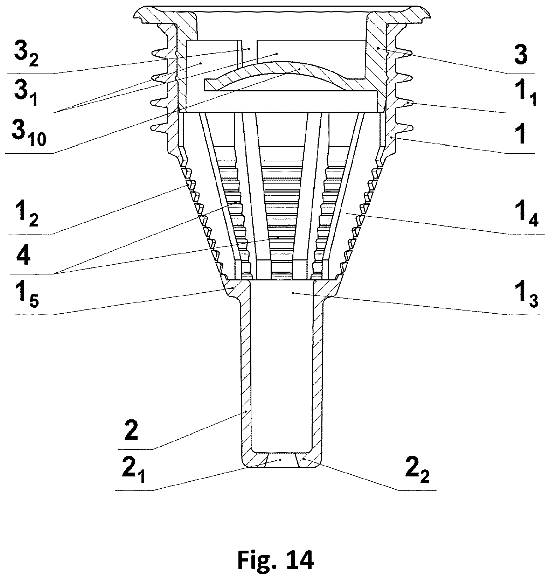

The sixth embodiment of the present invention depicted in **Fig.14****,** **Fig.15** differs from the first embodiment in that the pouring insert **3** comprises a cross partition **3₁₀**, which, through the radial ribs **3₂**, adjoins to the pouring insert **3** with the pouring openings **3₁** being disposed between the radial ribs **3₂.** The inventors have found that the use the stopper **1** in accordance with the present invention, due to the fluid communication between the air duct tube **2** and the central opening **1₃** of the support band **1₅** of the stopper **1** located in the upper, smaller base of the truncated cone of the lower part **1₂** of the stopper **1** produces a pressure difference sufficient to carry air from the cavity of the stopper **1** into the bottle cavity through the outlet opening **2₁** of the air duct tube **2.** Since the lower part **1₂** of the stopper **1** identification configured in the form of the truncated cone, and, In the process of pouring the liquid out of the bottle, it is tilted, all this leads to an uneven passage of the liquid through the filtering openings **4** and this results in the presence of air in the cavity of the stopper **1,** which air enters said cavity through the pouring openings **3₁** of the pouring insert **3.** At the same time, the presence of the cross partition **3₁₀** contributes to the formation of a liquid flow, which is poured out of the pouring openings **3₁**, as well as prevents the liquid from being splashed.

The assembly for closing a bottle containing a liquid (**Fig.15**), wherein the sixth embodiment of the present invention is implemented. Said assembly for closing a bottle containing comprises the bottleneck **6** of the bottle, on the pouring opening whereof the closing filtering device is secured, which device comprises the stopper **1,** the pouring insert **3** (**Fig.14**) with the pouring openings **3₁**, said pouring insert being connected to said stopper **1,** the filtering openings **4** and the sealing element of the pouring insert **3** configured in the form of the cover **5.** On the side surface of the truncated cone of the lower part **1₂** of the stopper **1,** the filtering openings **4** are provided while in the upper, smaller base of the truncated cone of the lower part **1₂** of the stopper **1,** the support band **1₅** is provided all the way around the central opening **1₃** of the stopper **1.** The air duct tube **2,** which is in fluid communication with the central opening **1₃** of the stopper **1,** adjoins to the support band **1₅**. The pouring insert **3** comprises the cross partition **3₁₀**, which adjoins to the pouring insert **3** through the radial ribs **3₂.** The pouring openings **3₁** are disposed between the radial ribs **3₂.**

The authors carried out a series of experiments to determine the rate of pouring liquid from a bottle when using the present invention. For this purpose, a 0.5-L glass bottle with a diameter of the bottleneck pouring openings of 20.5 mm was selected. Pre-crushed solid contents were placed in the bottle cavity, and then liquid - 40% vodka - was poured into the bottle cavity. A liquid with a high concentration of fine solids was artificially formed in the bottle cavity.

In the course of experiments, the first embodiment (**Fig.1** to **Fig.9**) and the sixth embodiment (**Fig.14****,** **Fig.15**) of the present invention were used, in which the assemblies for closing (**Fig.8** and **Fig.14**) were produced. During the experiments, it was found that the liquid pouring out speed did not exceed 50 seconds, which is sufficient and effective condition of using the present invention, while the solid particles were retained by the closing filtering device.

When using the present invention, a developed filtering surface is formed, on which the filtering openings are provided, and making them slit-like simplifies the manufacture of the stopper and increases their throughput capacity. The location of the filtering openings between the longitudinal ribs increases the reliability of the stopper design.

While various embodiments of the present invention have been described above, it should be understood that they have been presented by way of example only, and not in limitation.

This description provides information which is necessary and sufficient for a clear understanding of the present invention. Information which is obvious to those skilled in the art and which has not contributed to a better understanding of the essence of the present invention has not been given in this description.

The term "truncated cone" also refers to cone-like truncated shapes similar to a truncated cone, for example, the presence of kinks on the internal lateral surface of the truncated cone.

Furthermore, for example, according to the present invention, it is conceivable that the filter filtering device (**Fig. 1**) may be installed onto the bottleneck without the protective cap. In this case, a protective film (not shown in the figures) is applied to the cover and the bottleneck on the filling line after the closing filtering device has been installed, for example, by means of heat welding. The ultimate consumer tears off this protective film and then removes the cover from the stopper.

The protective cap or the end surface and/or the side surface of the protective cap may also be embossed.

From 3 to 16 longitudinal ribs may be employed in the stopper.

The filtering openings may be provided either in parallel or at an angle to the stopper or in various combinations.

### Technical Result

The technical result of the present invention is that the manufacture and service of the closing filtering device, the stopper thereof, and the assembly for closing a bottle containing a liquid are simplified and the reliability thereof is improved.

## Claims

1. A stopper of a closing filtering device for a bottle containing a liquid, which is placed in the pouring opening of the neck of said bottle containing the liquid, said stopper comprising sealing protrusions (**1₁**) provided on the external surface of said stopper (**1**) in the upper part thereof with the lower part (**1₂**) of the stopper (**1**) being made narrowed in the form of a truncated cone, in the upper smaller base whereof a central opening (**1₃**) being provided, said stopper (**1**) also comprising longitudinal ribs (**1₄**), ***characterized in that*** said opening is connected to the cavity of the stopper (**1**) and that filtering openings (**4**) are provided on the lateral surface of the truncated cone of the lower part (**1₂**) of the stopper (**1**) and, in the smaller, upper base of the truncated cone of the lower part (**1₂**) of the stopper (1), a support band (**1₅**) is provided running all the way around the central opening (**1₃**), with an air duct tube (**2**) adjoining to said support band (**1₅**) and being connected, at its inlet, to the central opening (**1₃**) of the stopper (**1**).

2. The stopper as claimed in claim **1**, wherein an end wall (**2₂**), in which comprises an outlet opening (**2₁**), is provided on the outlet side of the air duct tube (**2**).

3. The stopper as claimed in claim **2**, wherein the outlet opening (**2₁**) of the air duct tube (**2**) configured in the form of a confuser expanding from the central opening (**1₃**) of the stopper (**1)**.

4. The stopper as claimed in claim **1,** wherein the longitudinal ribs (**1₄**) adjoin to the support band (**1₅**).

5. The stopper as claimed in claim **1,** wherein the filtering openings (**4**) are made slit-like and are disposed between adjacent longitudinal ribs (**1₄**).

6. A closing filtering device for a bottle containing a liquid, ***characterized in that*** said device comprises the stopper (**1**) as claimed in any one of claims 1 to 5, a pouring insert (**3**) with pouring openings (**3₁**) said pouring insert being connected to said stopper (**1**), the pouring insert (**3**) comprising additionally an air duct (**3₃**), which, on its inlet side, adjoins the pouring insert (**3**), while the outlet side of the air duct (**3₃**) is inserted, in a backlash-free manner, into the central opening (**3₁**) of the stopper (**1**) in fluid communication with the air duct tube (**2**) of the stopper (**1**), with said closing filtering device further comprising a sealing element of the pouring insert (**3**).

7. The device as claimed in claim **6,** wherein the outlet opening of the air duct (**3₃**) comprises a cross partition (**3₄**) with pass-through openings (**3₅**).

8. The device as claimed in claim **6,** wherein the external surface of the air duct (**3₃**) of the pouring insert (**3**) has a taper, whose diameter decreases from the pouring insert (**3**).

9. The device as claimed in claim **6,** wherein a sealing element of the pouring insert (**3**) is configured in the form of a cover (**5**).

10. The device as claimed in claim **9,** wherein said device comprises a protective cap (**7**) on internal end surface whereof the cover (**5**) is fixed.

11. The device as claimed in claim **9,** wherein on the external surface of the pouring insert (**3**) a thread (**3₉**) is provided, which engages with a female thread (**5₂**) of the cover (**5**).

12. The device as claimed in claim **6,** wherein said device comprises the protective cap (**7**) and an sealing element of the pouring insert (**3**) is configured in the form of a sealing gasket (**5₁**) secured on the internal end surface of the protective cap (**7**).

13. The device as claimed in claim **6,** wherein said device comprises the protective cap (**7**), on the end surface whereof an elastic insert (**8**) is fixed, on the internal end surface whereof a sealing element configured in the form of the sealing gasket (**5₁**) is disposed, the elastic insert (**8**) comprising a female thread (**8₁**), which engages with a male thread (**6₁**) provided on the external surface of the bottleneck (**6**).

14. The device as claimed in claim **6,** wherein in the lower part of the pouring insert (**3**) there is provided a skirt (**3₇**) with retainers (**3₈**) that face inward into the pouring insert (**3**) and engage with an external collar (**6₂**) provided on the bottleneck (**6**).

15. The device as claimed in claim **6,** wherein in the area of the outlet opening of the air duct (**3₃**), a cross-sectional narrowing of the air duct tube (**3₃**) is provided and, as a result thereof, a shoulder (**3₆**) is formed on its outer surface said shoulder resting on the longitudinal ribs in the area where they adjoin to the support band (**1₅**) of the central opening (**1₃**).

16. A closing filtering device for a bottle containing a liquid, ***characterized in that*** said device comprises the stopper (**1**) as claimed in any one of claims 1 to 5, the pouring insert (**3**) comprising the pouring openings (**3₁**) and being connected to said stopper (**1**) with the pouring insert (**3**) further comprising a cross partition (**3₁₀**) that adjoins to the pouring insert (**3**) by means of radial ribs (**3₂**) with the pouring openings (**3₁**) being disposed therebetween, as well as the closing filtering device comprises a sealing element of the pouring insert (**3**).

17. The device as claimed in claim **16**, wherein the sealing element of the pouring insert (**3**) is configured in the form of the cover (**5**) sixed on the pouring insert (**3**).

18. The device as claimed in claim **17,** wherein said device comprises the protective cap (**7**) with the cover (**5**) being secured on the internal end surface whereof.

19. The device as claimed in claim **17,** wherein the thread (**3₉**) is provided on the external surface of the pouring insert (**3**), which thread engages with the female thread (**5₂**) of the cover (**5**).

20. The device as claimed in claim **16,** wherein said device comprises the protective cap (**7**), the sealing element is configured in the form of the sealing gasket (**5₁**) secured on the internal end surface of the protective cap (**7**).

21. The device as claimed in claim **16,** wherein said device comprises the protective cap (**7**), on the end surface whereof an elastic insert (**8**) is fixed, on the internal end surface whereof a sealing element configured in the form of the sealing gasket (**5₁**) is disposed, the elastic insert (**8**) comprising a female thread (**8₁**), which engages with a male thread (**6₁**) provided on the external surface of the bottleneck (**6**).

22. The device as claimed in claim **16,** wherein in the lower part of the pouring insert (**3**) there is provided a skirt (**3₇**) with retainers (**3₈**) that face inward into the pouring insert (**3**) and engage with an external collar (**6₂**) provided on the bottleneck (**6**)

23. An assembly for closing a bottle containing a liquid assembly ***characterized by*** the presence of a bottleneck of the bottle containing the liquid the closing filtering device for a bottle containing a liquid in accordance with any one of claims **6** to **22** being fixed thereon.

## Patentansprüche

1. Stopfen einer Verschlussfiltervorrichtung für eine Flasche, die eine Flüssigkeit enthält, der in der Ausgießöffnung des Halses der Flasche, die die Flüssigkeit enthält, platziert ist, wobei der Stopfen Dichtungsvorsprünge (1₁) umfasst, die auf der äußeren Fläche des Stopfens (1) in dessen oberen Teil vorgesehen sind, wobei der untere Teil (1₂) des Stopfens (1) in der Form eines Kegelstumpfes verengt ausgebildet ist, in dessen oberer kleinerer Basis eine zentrale Öffnung (1₃) vorgesehen ist, wobei der Stopfen (1) auch Längsrippen (1₄) umfasst,
**dadurch gekennzeichnet, dass** die Öffnung mit dem Hohlraum des Stopfens (1) verbunden ist und dass Filteröffnungen (4) auf der seitlichen Fläche des Kegelstumpfes des unteren Teils (1₂) des Stopfens (1) vorgesehen sind und in der kleineren, oberen Basis des Kegelstumpfes des unteren Teils (1₂) des Stopfens (1) ein Trägerband (1₅) vorgesehen ist, das vollständig um die zentrale Öffnung (1₃) herum verläuft, wobei eine Luftkanalröhre (2) an das Trägerband (1₅) angrenzt und an ihrem Einlass mit der zentralen Öffnung (1₃) des Stopfens (1) verbunden ist.

2. Stopfen nach Anspruch 1, wobei eine Endwand (2₂), die eine Auslassöffnung (2₁) umfasst, auf der Auslassseite der Luftkanalröhre (2) vorgesehen ist.

3. Stopfen nach Anspruch 2, wobei die Auslassöffnung (2₁) der Luftkanalröhre (2), die in der Form eines Konfusors eingerichtet ist, sich von der zentralen Öffnung (1₃) des Stopfens (1) aus erweitert.

4. Stopfen nach Anspruch 1, wobei die Längsrippen (1₄) an dem Trägerband (1₅) angrenzen.

5. Stopfen nach Anspruch 1, wobei die Filteröffnungen (4) schlitzartig ausgebildet sind und zwischen benachbarten Längsrippen (1₄) angeordnet sind.

6. Verschlussfiltervorrichtung für eine Flasche, die eine Flüssigkeit enthält, **dadurch gekennzeichnet, dass** die Vorrichtung den Stopfen (1) nach einem der Ansprüche 1 bis 5 und einen Ausgießeinsatz (3) mit Ausgießöffnungen (3₁) umfasst, wobei der Ausgießeinsatz mit dem Stopfen (1) verbunden ist, wobei der Ausgießeinsatz (3) zusätzlich einen Luftkanal (3₃) umfasst, der auf seiner Einlassseite an den Ausgießeinsatz (3) angrenzt, während die Auslassseite des Luftkanals (3₃) in die zentrale Öffnung (3₁) des Stopfens (1) in Fluidverbindung mit der Luftkanalröhre (2) des Stopfens (1) spielfrei eingesetzt ist, wobei die Verschlussfiltervorrichtung ferner ein Dichtungselement des Ausgießeinsatzes (3) umfasst.

7. Vorrichtung nach Anspruch 6, wobei die Auslassöffnung des Luftkanals (3₃) eine Quertrennwand (3₄) mit Durchgangsöffnungen (3₅) umfasst.

8. Vorrichtung nach Anspruch 6, wobei die äußere Fläche des Luftkanals (3₃) des Ausgießeinsatzes (3) eine Verjüngung aufweist, deren Durchmesser von dem Ausgießeinsatz (3) aus abnimmt.

9. Vorrichtung nach Anspruch 6, wobei ein Dichtungselement des Ausgießeinsatzes (3) in der Form einer Abdeckung (5) eingerichtet ist.

10. Vorrichtung nach Anspruch 9, wobei die Vorrichtung eine Schutzkappe (7) umfasst, an deren inneren Endfläche die Abdeckung (5) befestigt ist.

11. Vorrichtung nach Anspruch 9, wobei auf der äußeren Fläche des Ausgießeinsatzes (3) ein Gewinde (3₉) vorgesehen ist, das in ein Innengewinde (5₂) der Abdeckung (5) eingreift.

12. Vorrichtung nach Anspruch 6, wobei die Vorrichtung die Schutzkappe (7) umfasst und ein Dichtungselement des Ausgießeinsatzes (3) in der Form eines Dichtungsrings (5₁) eingerichtet ist, der auf der inneren Endfläche der Schutzkappe (7) gesichert ist.

13. Vorrichtung nach Anspruch 6, wobei die Vorrichtung die Schutzkappe (7) umfasst, auf deren Endfläche ein elastischer Einsatz (8) befestigt ist, auf dessen innerer Endfläche ein Dichtungselement, das in der Form des Dichtungsrings (5₁) eingerichtet ist, angeordnet ist, wobei der elastische Einsatz (8) ein Innengewinde (8₁) umfasst, das mit einem Außengewinde (6₁) in Eingriff steht, das auf der äußeren Fläche des Flaschenhalses (6) vorgesehen ist.

14. Vorrichtung nach Anspruch 6, wobei in dem unteren Teil des Ausgießeinsatzes (3) eine Schürze (3₇) mit Haltern (3₈) vorgesehen ist, die nach innen in den Ausgießeinsatz (3) weisen und mit einem äußeren Kragen (6₂) in Eingriff stehen, der auf dem Flaschenhals (6) vorgesehen ist.

15. Vorrichtung nach Anspruch 6, wobei in dem Bereich der Auslassöffnung des Luftkanals (3₃) eine Querschnittsverengung der Luftkanalröhre (3₃) vorgesehen ist und dadurch eine Schulter (3₆) auf ihrer äußeren Fläche gebildet ist, wobei die Schulter auf den Längsrippen in dem Bereich aufliegt, in dem sie an das Trägerband (1₅) der zentralen Öffnung (1₃) angrenzen.

16. Verschlussfiltervorrichtung für eine Flasche, die eine Flüssigkeit enthält, **dadurch gekennzeichnet, dass** die Vorrichtung den Stopfen (1) nach einem der Ansprüche 1 bis 5 und den Ausgießeinsatz (3) umfasst, der die Ausgießöffnungen (3₁) umfasst und mit dem Stopfen (1) verbunden ist, wobei der Ausgießeinsatz (3) ferner eine Quertrennwand (3₁₀) umfasst, die an den Ausgießeinsatz (3) mittels radialer Rippen (3₂) angrenzt, wobei die Ausgießöffnungen (3₁) dazwischen angeordnet sind, und die Verschlussfiltervorrichtung ein Dichtungselement des Ausgießeinsatzes (3) umfasst.

17. Vorrichtung nach Anspruch 16, wobei das Dichtungselement des Ausgießeinsatzes (3) in der Form der Abdeckung (5) eingerichtet ist, die auf dem Ausgießeinsatz (3) befestigt ist.

18. Vorrichtung nach Anspruch 17, wobei die Vorrichtung die Schutzkappe (7) umfasst, an deren innerer Endfläche die Abdeckung (5) gesichert ist.

19. Vorrichtung nach Anspruch 17, wobei das Gewinde (3₉) auf der äußeren Fläche des Ausgießeinsatzes (3) vorgesehen ist, wobei das Gewinde mit dem Innengewinde (5₂) der Abdeckung (5) in Eingriff steht.

20. Vorrichtung nach Anspruch 16, wobei die Vorrichtung die Schutzkappe (7) umfasst, wobei das Dichtungselement in der Form des Dichtungsrings (5₁) eingerichtet ist, der auf der inneren Endfläche der Schutzkappe (7) gesichert ist.

21. Vorrichtung nach Anspruch 16, wobei die Vorrichtung die Schutzkappe (7) umfasst, auf deren Endfläche ein elastischer Einsatz (8) befestigt ist, auf dessen innerer Endfläche ein Dichtungselement, das in der Form des Dichtungsrings (5₁) eingerichtet ist, angeordnet ist, wobei der elastische Einsatz (8) ein Innengewinde (8₁) umfasst, das mit einem Außengewinde (6₁) in Eingriff steht, das auf der äußeren Fläche des Flaschenhalses (6) vorgesehen ist.

22. Vorrichtung nach Anspruch 16, wobei in dem unteren Teil des Ausgießeinsatzes (3) eine Schürze (3₇) mit Haltern (3₈) vorgesehen ist, die nach innen in den Ausgießeinsatz (3) weisen und mit einem äußeren Kragen (6₂) in Eingriff stehen, der auf dem Flaschenhals (6) vorgesehen ist.

23. Anordnung zum Verschließen einer Flasche, die eine Flüssigkeit enthält, **gekennzeichnet durch** das Vorhandensein eines Flaschenhalses der Flasche, die die Flüssigkeit enthält, wobei die Verschlussfiltervorrichtung für eine Flasche, die eine Flüssigkeit enthält, nach einem der Ansprüche 6 bis 22 darauf befestigt ist.

## Revendications

1. Bouchon de dispositif de bouchage filtrant pour une bouteille contenant un liquide, lequel est placé dans l'ouverture de versement du col de ladite bouteille contenant le liquide, ledit bouchon comprenant des saillies d'étanchéité (1₁) disposées sur la surface extérieure dudit bouchon (1) dans la partie supérieure de celui-ci, la partie inférieure (1₂) du bouchon (1) étant rétrécie en forme de cône tronqué, dans la base plus étroite supérieure duquel se trouve une ouverture centrale (1₃), ledit bouchon (1) comprenant également des nervures longitudinales (1₄),
**caractérisé en ce que** ladite ouverture est reliée à la cavité du bouchon (1) et **en ce que** des ouvertures filtrantes (4) sont disposées sur la surface latérale du cône tronqué de la partie inférieure (1₂) du bouchon (1), et, dans la base supérieure plus étroite du cône tronqué de la partie inférieure (1₂) du bouchon (1), il est prévu une bande de support (1₅) s'étendant tout autour de l'ouverture centrale (1₃), avec une tube de conduit d'air (2) adjacent à ladite bande de support (1₅) et relié à l'ouverture centrale (1₃) du bouchon (1) au niveau de son entrée.

2. Bouchon selon la revendication 1, dans lequel une paroi terminale (2₂) comprenant une ouverture de sortie (2₁) est disposée sur le côté sortie du tube de conduit d'air (2).

3. Bouchon selon la revendication 2, dans lequel l'ouverture de sortie (2₁) du tube de conduit d'air (2) est configurée sous la forme d'un concentrateur s'élargissant à partir de l'ouverture centrale (1₃) du bouchon (1).

4. Bouchon selon la revendication 1, dans lequel les nervures longitudinales (1₄) sont adjacentes à la bande de support (1₅).

5. Bouchon selon la revendication 1, dans lequel les ouvertures filtrantes (4) sont conçues comme des fentes et disposées entre des nervures longitudinales (1₄) adjacentes.

6. Dispositif de bouchage filtrant pour une bouteille contenant un liquide, **caractérisé en ce que** ledit dispositif comprend le bouchon (1) selon l'une quelconque des revendications 1 à 5, un insert verseur (3) avec des ouvertures de versement (3₁), ledit insert verseur étant relié audit bouchon (1), l'insert verseur (3) comprenant en outre un conduit d'air (3₃), lequel est adjacent à l'insert verseur (3) sur son côté entrée, tandis que le côté sortie du conduit d'air (3₃) est inséré sans jeu dans l'ouverture centrale (3₁) du bouchon (1) en communication fluidique avec le tube de conduit d'air (2) du bouchon (1), ledit dispositif de bouchage filtrant comprenant en outre un élément d'étanchéité de l'insert verseur (3).

7. Dispositif selon la revendication 6, dans lequel l'ouverture de sortie du conduit d'air (3₃) comprend une cloison transversale (3₄) avec des ouvertures de passage (3₅).

8. Dispositif selon la revendication 6, dans lequel la surface extérieure du conduit d'air (3₃) de l'insert verseur (3) présente une partie effilée, dont le diamètre diminue à partir de l'insert verseur (3).

9. Dispositif selon la revendication 6, dans lequel un élément d'étanchéité de l'insert verseur (3) est configuré sous la forme d'un couvercle (5).

10. Dispositif selon la revendication 9, dans lequel ledit dispositif comprend un capuchon de protection (7) à la surface terminale intérieure duquel le couvercle (5) est fixé.

11. Dispositif selon la revendication 9, dans lequel, sur la surface extérieure de l'insert verseur (3), il est prévu un filetage (3₉) s'engageant avec un filetage femelle (5₂) du couvercle (5).

12. Dispositif selon la revendication 6, dans lequel ledit dispositif comprend le capuchon de protection (7) et un élément d'étanchéité de l'insert verseur (3) est configuré sous la forme d'une garniture d'étanchéité (5₁) fixée à la surface terminale intérieure du capuchon de protection (7).

13. Dispositif selon la revendication 6, dans lequel ledit dispositif comprend le capuchon de protection (7), sur la surface terminale duquel est fixé un insert élastique (8), sur la surface terminale intérieure duquel est disposé un élément d'étanchéité configuré sous la forme de la garniture d'étanchéité (5₁), l'insert élastique (8) comprenant un filetage femelle (8₁), lequel s'engage avec un filetage mâle (6₁) disposé sur la surface extérieure du col de bouteille (6).

14. Dispositif selon la revendication 6, dans lequel, dans la partie inférieure de l'insert verseur (3), il est prévu une collerette (3₇) avec des éléments de retenue (3₈), lesquels sont tournés vers l'intérieur dans l'insert verseur (3) et s'engagent avec un collier externe (6₂) disposé sur le col de bouteille (6).

15. Dispositif selon la revendication 6, dans lequel, dans la zone de l'ouverture de sortie du conduit d'air (3₃), il est prévu un rétrécissement de section transversale du tube de conduit d'air (3₃) et, par conséquent, un épaulement (3₆) est formé sur sa surface extérieure, ledit épaulement reposant sur les nervures longitudinales dans la zone où celles-ci sont adjacentes à la bande de support (1₅) de l'ouverture centrale (1₃).

16. Dispositif de bouchage filtrant pour une bouteille contenant un liquide, **caractérisé en ce que** ledit dispositif comprend le bouchon (1) selon l'une quelconque des revendications 1 à 5, l'insert verseur (3) comprenant les ouvertures de versement (3₁) et étant relié audit bouchon (1), l'insert verseur (3) comprenant en outre une cloison transversale (3₁₀) adjacente à l'insert verseur (3) par le biais de nervures radiales (3₂) avec les ouvertures de versement (3₁) disposées entre celles-ci, et le dispositif de bouchage filtrant comprend également un élément d'étanchéité de l'insert verseur (3).

17. Dispositif selon la revendication 16, dans lequel l'élément d'étanchéité de l'insert verseur (3) est configuré sous la forme du couvercle (5) fixé à l'insert verseur (3).

18. Dispositif selon la revendication 17, dans lequel ledit dispositif comprend le capuchon de protection (7), le couvercle (5) étant fixé à la surface terminale intérieure de celui-ci.

19. Dispositif selon la revendication 17, dans lequel le filetage (3₉) est disposé sur la surface extérieure de l'insert verseur (3), ledit filetage d'engageant avec le filetage femelle (5₂) du couvercle (5).

20. Dispositif selon la revendication 16, dans lequel ledit dispositif comprend le capuchon de protection (7), l'élément d'étanchéité est configuré sous la forme de la garniture d'étanchéité (5₁) fixée à la surface terminale intérieure du capuchon de protection (7).

21. Dispositif selon la revendication 16, dans lequel ledit dispositif comprend le capuchon de protection (7), à la surface terminale duquel est fixé un insert élastique (8), à la surface terminale intérieure duquel est disposé un élément d'étanchéité configuré sous la forme de la garniture d'étanchéité (5₁), l'insert élastique (8) comprenant un filetage femelle (8₁), lequel s'engage avec un filetage mâle (6₁) disposé sur la surface extérieure du col de bouteille (6).

22. Dispositif selon la revendication 16, dans lequel, dans la partie inférieure de l'insert verseur (3), il est prévu une collerette (3₇) avec des éléments de retenue (3₈), lesquels sont tournés vers l'intérieur ans l'insert verseur (3) et s'engagent avec un collier extérieur (6₂) disposé sur le col de bouteille (6).

23. Ensemble de bouchage pour une bouteille contenant un ensemble de liquide, **caractérisé par** la présence d'un col de bouteille de la bouteille contenant le liquide, le dispositif de bouchage filtrant pour une bouteille contenant un liquide selon l'une quelconque des revendications 6 à 22 étant fixé à celui-ci.
